(19) Europäisches Patentamt
European Patent Office
Office européen des brevets

(11) **EP 3 102 906 B1**

(12) **FASCICULE DE BREVET EUROPEEN**

(45) Date de publication et mention
de la délivrance du brevet:
**05.12.2018 Bulletin 2018/49**

(21) Numéro de dépôt: **15704735.8**

(22) Date de dépôt: **03.02.2015**

(51) Int Cl.:
**F42B 1/032** *(2006.01)*       **F42B 15/36** *(2006.01)*
**F42B 15/38** *(2006.01)*       **B64G 1/64** *(2006.01)*

(86) Numéro de dépôt international:
**PCT/EP2015/052172**

(87) Numéro de publication internationale:
**WO 2015/117945 (13.08.2015 Gazette 2015/32)**

(54) **CHARGE CREUSE ET APPLICATION POUR LA SÉPARATION DE DEUX ÉTAGES D'UN ENGIN AÉRONAUTIQUE OU SA NEUTRALISATION**

HOHLLADUNG UND VERWENDUNG ZUR TRENNUNG VON ZWEI STOCKWERKEN EINES LUFTFAHRTFAHRZEUGS ODER ZUR NEUTRALISIERUNG DAVON

HOLLOW CHARGE AND USE FOR SEPARATING TWO FLOORS OF AN AERONAUTICAL VEHICLE OR FOR THE NEUTRALIZATION THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.02.2014 FR 1450855**

(43) Date de publication de la demande:
**14.12.2016 Bulletin 2016/50**

(73) Titulaire: **ArianeGroup SAS**
**75015 Paris (FR)**

(72) Inventeurs:
• **MEDINA, Felipe**
  **F-78170 La Celle-Saint-Cloud (FR)**
• **PREAUD, Luc**
  **F-78440 Gargenville (FR)**

(74) Mandataire: **Brevalex**
**95, rue d'Amsterdam**
**75378 Paris Cedex 8 (FR)**

(56) Documents cités:
EP-A1- 0 971 199       WO-A1-2012/013926
US-A- 2 972 948        US-A- 3 244 104
US-A- 4 649 824        US-A1- 2011 139 505

**Description**

Domaine de l'invention

L'invention concerne les charges creuses, de manière générale, pour toutes les applications de l'aéronautique.

Art antérieur et problème posé

Les charges creuses constituent une technologie utilisée, au préalable, pour constituer des munitions, en particulier, destinées à percer des blindages. Toutefois, elles peuvent trouver de nombreuses applications dans l'industrie de l'aéronautique, par exemple pour sectionner des câbles, ou détériorer une partie de liaison, dans le but de séparer deux ensembles liés au préalable.

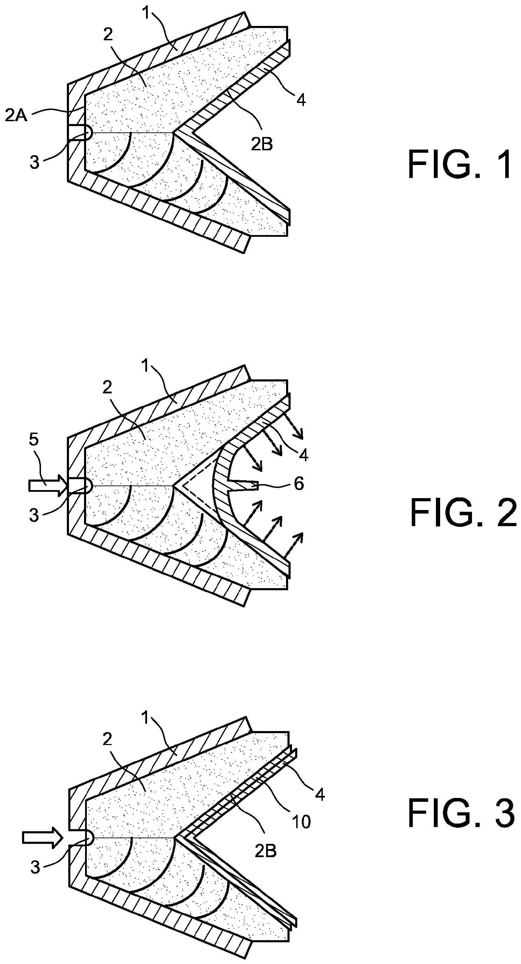

En référence à la figure 1, une charge creuse classique comprend principalement une enveloppe 1 de forme creuse, une charge explosive 2, placée à l'intérieur de l'enveloppe 1, un détonateur 3, placé sur une surface arrière 2A de la charge explosive, et un revêtement métallique 4, placé sur une surface avant 2B de la charge explosive. On précise que le revêtement métallique 4 est, de préférence, du cuivre.

En référence à la figure 2, le fonctionnement de la charge creuse est le suivant. Le détonateur 3 est percuté par une plaque projetée, comme l'indique la flèche 5. La charge explosive 2 est donc initiée et rentre en régime de détonation. Une onde se propage alors dans toute la masse d'explosif de la charge explosive 2. Du fait de la forme creuse en V de la surface 2B de la figure 1, une concentration d'énergie se produit dans l'axe de la charge creuse et notamment au fond du V de la surface 2B de la charge explosive 2. Le revêtement 4 est donc propulsé et concentré sur l'axe de la charge creuse pour former un jet 6. On exprime la vitesse de propagation du jet 6 par la formule suivante :

$$V = 2.D.\sin(\alpha/2),$$

où V est la vitesse du jet, et D est la vitesse de la détonation.

On conçoit qu'un tel dispositif puisse avoir de nombreuses applications dans l'industrie, notamment dans les armes militaires, pour percer des blindages.

Les documents US2972948, US2011/0139505 et US3244104 illustrent respectivement une arme formée d'une charge creuse, un dispositif de forage, et un dispositif de séparation d'étages de missile, représentatifs de l'art antérieur.

Le but de l'invention est de proposer un type amélioré de charge creuse pour des applications aéronautiques, notamment pour la séparation de deux étages d'un engin aéronautique, tel qu'une fusée et ses étages lanceurs.

Objet de l'invention

Un premier objet de l'invention est donc une charge creuse comprenant :

- une enveloppe de confinement ;
- une charge explosive, placée dans l'enveloppe de confinement et ayant une surface concave en Vé ;
- un revêtement de matériau de projection, placé devant la surface concave en Vé de la charge explosive.

Selon l'invention, on utilise du matériau pyrogène, c'est-à-dire générateur de chaleur, pour chauffer le revêtement de matériau de projection.

Dans une première réalisation, le matériau pyrogène est placé sur la surface concave en Vé de la charge explosive, le revêtement de matériau de projection étant placé sur le matériau pyrogène.

Dans une deuxième réalisation de l'invention, le matériau pyrogène est mélangé dans la charge explosive.

Un deuxième objet principal de l'invention est un dispositif de séparation de deux étages d'un engin aéronautique, les deux étages étant reliés entre eux par une partie de liaison.

Selon l'invention, on utilise une charge creuse, telle que définie précédemment, de forme circulaire, placée autour de la partie de liaison, le matériau pyrogène étant placé face à une surface interne de cette partie de liaison.

Un troisième objet principal est un dispositif de neutralisation d'une partie d'un engin aéronautique.

Selon l'invention, on utilise une charge creuse, telle que définie précédemment, le matériau pyrogène étant placé face à une surface interne de l'engin aéronautique.

Deux possibilités sont envisagées, l'une étant d'utiliser une couronne circulaire de cette charge creuse placée contre la surface interne d'une partie de l'engin aéronautique à détruire, tandis qu'une deuxième possibilité est d'utiliser une charge creuse de forme rectiligne, celle-ci étant placée contre une surface interne de la partie de l'engin aéronautique à neutraliser, c'est-à-dire détruire, ceci de manière longitudinale, par rapport à l'axe de l'engin aéronautique.

Liste des figures

L'invention et ses différentes caractéristiques techniques seront mieux comprises à la lecture de la description suivante, accompagnée de plusieurs figures, représentant respectivement :

- figure 1, en coupe, une charge creuse selon l'art antérieur, avant son fonctionnement ;
- figure 2, en coupe, la même charge creuse selon l'art antérieur, mais pendant son fonctionnement ;

- figure 3, en coupe, une charge creuse selon l'invention, dans une première réalisation ;
- figure 4, trois types d'application de la charge creuse selon l'invention ;
- figures 5A à 5C, trois schémas représentant l'application de la charge creuse selon l'invention pour la séparation de deux parties d'un lanceur aéronautique ; et
- figures 6A et 6C, des schémas relatifs au fonctionnement de cette application.

Description détaillée de l'invention

En référence à la figure 3, la charge creuse selon l'invention comprend, comme celle de l'art antérieur, une enveloppe 1, dans laquelle est placée une charge explosive 2, toujours avec une forme concave en V, de révolution ou longiligne, et recouverte d'un revêtement de projection 4 qui est métallique. Bien entendu, un détonateur 3 est placé derrière la charge explosive 2 pour pouvoir faire entrer en détonation la charge creuse.

Selon l'invention, dans la première réalisation selon l'invention, on place une couche de matériau pyrogène 10, sur la surface 2B en V de la charge explosive 2, et derrière le revêtement de projection 4. En d'autres termes, le matériau pyrogène 10 est pris en sandwich entre le revêtement de projection 4 et la charge explosive 2.

Ce matériau pyrogène 10, c'est-à-dire générateur de chaleur, est de préférence de la thermite, ou des nanothermites. Lors de la mise en régime de détonation de la charge explosive 2 par le déclenchement du détonateur 3, une onde de propagation se propage dans toute la charge explosive 2 et atteint la surface concave en Vé 2B. La couche de matériau pyrogène 10, qui commence alors à être décollée et chauffée très rapidement. Le jet 6, décrit à la figure 2, se forme alors, avec un amalgame de matériau pyrogène 10 et du revêtement de projection 4. Sous l'action de l'onde de choc, il y a donc un relèvement progressif de l'ensemble du matériau pyrogène 10 et du revêtement de projection 2, avec un échauffement très rapide et la mise en fusion de cet amalgame.

On ajoute donc à l'effet mécanique de projection du jet 6 (figure 2), un effet thermique, permettant de faire fondre plus facilement la cible.

Le choix du revêtement de projection 4 est de préférence fait en fonction de la cible et de la densité de celle-ci. On peut définir ce choix par la formule suivante :

$$P = L \cdot \sqrt{\rho_j}/\rho_c ,$$

où $\rho_j$ est la densité du matériau du revêtement de projection,
$\rho_c$ est la densité de la cible,
L étant la longueur du jet, et
P étant la longueur de pénétration du jet dans la cible.

Le choix des nanothermites ou des thermites constituant le matériau pyrogène 10 se fait en fonction du matériau du revêtement de projection 4, ainsi que du temps de trajet du jet, qui est fortement fonction de la densité du revêtement de matériau de projection 4 et de la charge explosive 2. L'objectif est d'atteindre un maximum de températures, au moment de l'impact du jet, sur la cible.

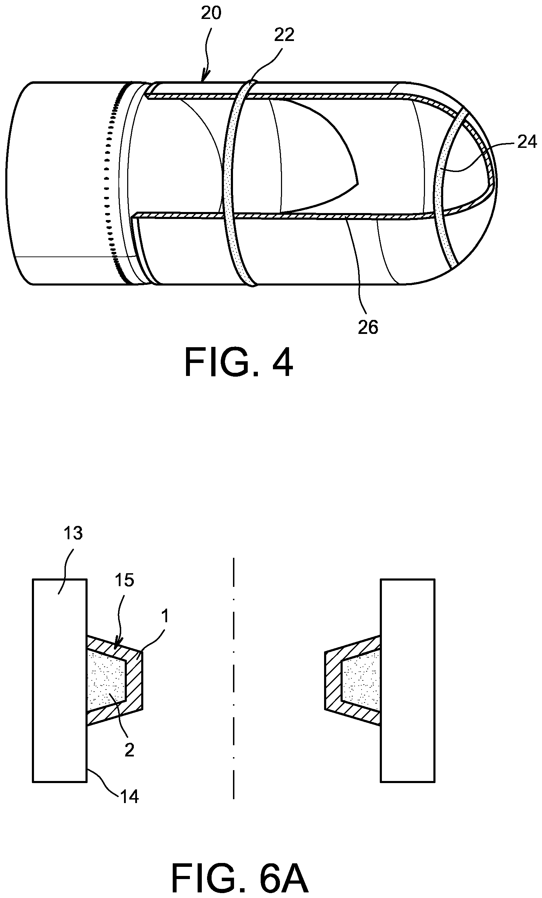

En référence à la figure 4, l'avant d'un engin aéronautique est représenté. Sur la paroi 20 de celui-ci, sont représentés trois parties foncées 22, 24 et 26. Les parties 22 et 24 sont des parties de révolution collées sur la surface interne de la paroi 20 de l'engin aéronautique. Elles sont constituées chacune d'une couronne comprenant une charge creuse comme décrite précédemment. La surface concave en Vé, recouverte du revêtement de projection, est dirigée contre cette surface interne de la paroi 20 de l'engin aéronautique. La couronne 22 est placée sur la partie cylindrique de l'engin aéronautique, là où on décide de pratiquer une intrusion pour neutraliser, c'est-à-dire détruire l'engin.

La couronne 24 est placée à l'intérieur de la partie avant de l'engin aéronautique, sur une surface interne qui n'est pas cylindrique, mais de forme conique, ou en ogive, par exemple le fond d'un réservoir. Le revêtement de matériau de projection est toujours dirigé contre la surface interne de la paroi 20 de cet engin aéronautique.

Enfin, la partie 26 est une partie longiligne constituée d'un barreau, formée de charge creuse, telle que décrite précédemment, le revêtement de projection étant dirigé aussi contre la surface interne de la paroi 20 de l'engin aéronautique.

Ces différentes couronnes et barreaux sont placées en face de la partie qu'on souhaite détruire et/ou neutraliser.

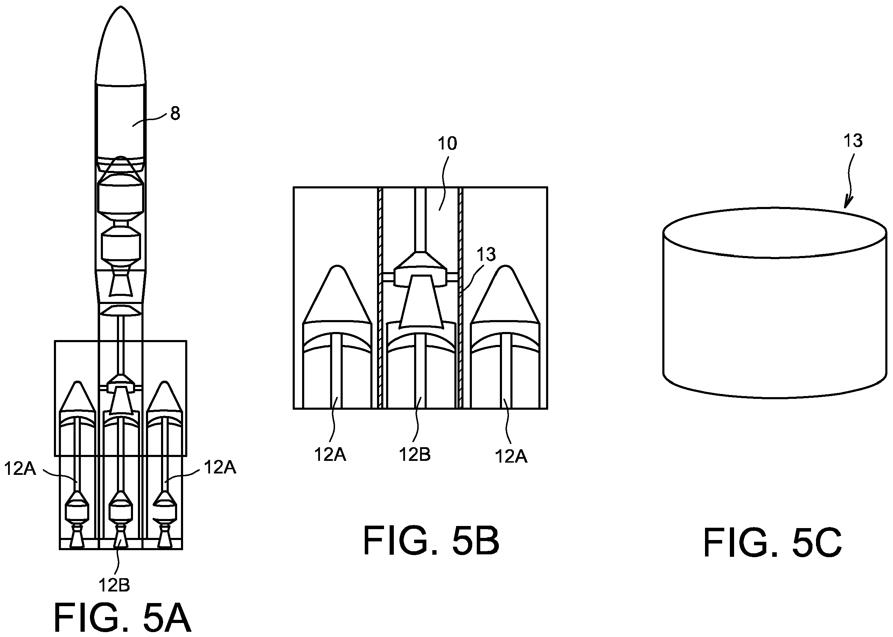

La figure 5A représente les étages 8 d'un lanceur aéronautique, équipé de plusieurs propulseurs 12A et 12B, placés à la base des étages 8 du lanceur aéronautique.

La figure 5B montre un détail de cet ensemble, notamment au niveau de la partie supérieure des propulseurs 12A et 12B. En effet, on voit que le propulseur central 12B est surmonté des étages 8. Cette liaison s'effectue par une couronne de liaison 13, qui est représentée à part de la figure 5C.

Le fonctionnement du dispositif de séparation selon l'invention est illustré à la figure 6A, en coupe détaillée, au niveau de la couronne de liaison 13. Celle-ci comporte, sur sa paroi interne 14, une couronne de charge creuse 15. Cette dernière est constituée principalement de l'enveloppe 1, torique et ouverte du côté de son diamètre externe. Elle est remplie par la charge explosive 2 contenant ou étant recouverte par le matériau pyrogène et par le revêtement de projection.

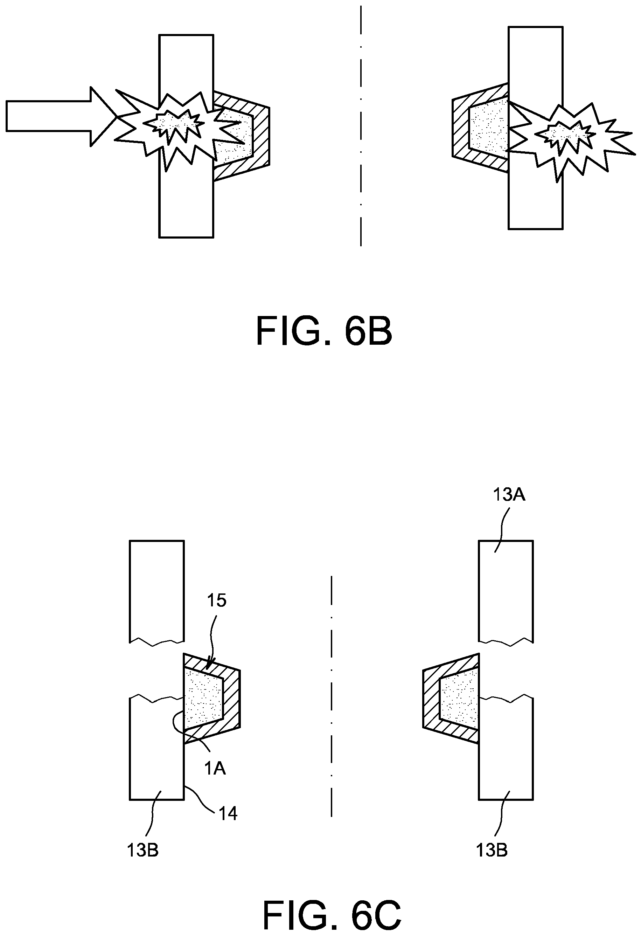

En référence à la figure 6B, la mise à feu de la charge creuse 15 provoque un échauffement brutal, jusqu'à la fusion des parties de la couronne de liaison 13, se trouvant en regard. L'échauffement de cette partie de la couronne de liaison 13, jusqu'à son point de fusion, provoque la séparation de cette couronne 13, en deux parties. Ces deux parties sont représentées à la figure 6C, une partie supérieure 13A et une partie inférieure 13B. On comprend, sur cette figure 6C, que la charge creuse 15 a été préalablement fixée par un des bords 1A de l'enveloppe 1, sur la paroi 14 de la couronne de liaison 13. De ce fait, après la séparation des deux parties inférieure 13B et supérieure 13A de la couronne de liaison 13, la charge creuse 15 reste solidaire d'une des deux parties, en l'occurrence la partie inférieure 13B de la couronne de liaison 13. En effet, dans l'application à un lanceur aéronautique, on choisit que la charge creuse 15 reste solidaire de l'étage inférieur, qui ne continu pas le vol de l'engin aéronautique et retombe sur terre. Cela permet d'éviter que la structure continuant le vol soit échauffée pendant une durée plus longtemps que nécessaire.

Dans deux réalisations différentes du dispositif selon l'invention, la couronne de liaison 13 peut être une pièce à part entière, c'est-à-dire ne faisant pas partie ni d'un premier élément, ni d'un deuxième élément, qui doivent être séparés, à savoir les étages 8 et le propulseur central 12B. Cette couronne de liaison 13 est alors soudée, par ces deux extrémités, à chacun de ces deux éléments.

Dans une deuxième réalisation, on prévoit que la couronne de liaison 13 fasse partie intégrante de la paroi d'un des deux éléments, de préférence l'élément inférieur, à savoir le propulseur central 12B. En d'autres termes, dans ce cas, la couronne de liaison 13 est le prolongement de la paroi externe de ce propulseur central 12B.

Des moyens de déclenchement pyrotechnique à distance sont prévus pour initier l'explosion de la charge creuse 15.

## Revendications

1. Engin aéronautique (10, 12B) comprenant deux étages reliés entre eux par une partie de liaison (13), et un dispositif de séparation des étages comprenant une charge creuse (15) de forme circulaire placée contre la partie de liaison (13), la charge creuse comprenant une enveloppe de confinement (1), une charge explosive (2) placée dans l'enveloppe de confinement (1) et ayant une surface concave en Vé (2B), un détonateur (3) placé derrière la charge explosive (2), et un revêtement de projection (4) placé devant la surface concave en Vé (2B) de la charge explosive (2), la charge explosive (15) comportant en outre un matériau pyrogène (10) pour chauffer le revêtement de projection (4), le matériau pyrogène (10) étant placé sur la surface concave en Vé (2B) de la charge explosive (2) et le revêtement de projection (4) étant placé sur le matériau pyrogène (10), ou le matériau pyrogène (10) étant mélangé dans la charge explosive (2).

2. Engin aéronautique, **caractérisé en ce qu'**il comprend un dispositif de neutralisation d'une partie dudit engin, le dispositif de neutralisation comprenant une charge creuse (15), comprenant une enveloppe de confinement (1), une charge explosive (2) placée dans l'enveloppe de confinement (1) et ayant une surface concave en Vé (2B), un détonateur (3) placé derrière la charge explosive (2), et un revêtement de projection (4) placé devant la surface concave en Vé (2B) de la charge explosive (2), la charge explosive (15) comportant en outre un matériau pyrogène (10) placé contre une surface interne d'une paroi (20) de l'engin aéronautique pour chauffer le revêtement de projection (4), le matériau pyrogène (10) étant placé sur la surface concave en Vé (2B) de la charge explosive (2) et le revêtement de projection (4) étant placé sur le matériau pyrogène (10), ou le matériau pyrogène (10) étant mélangé dans la charge explosive (2).

3. Engin aéronautique selon la revendication 2, **caractérisé en ce que** la charge creuse (22, 24) est de révolution et entourée par la paroi (20) de l'engin aéronautique (20).

4. Engin aéronautique selon la revendication 2, **caractérisé en ce que** la charge creuse (26) est longiligne et est placée sur une génératrice de la surface interne de la paroi (20) de l'engin aéronautique.

## Patentansprüche

1. Luftfahrtfahrzeug (10, 2B) aufweisend zwei über ein Verbindungsteil (13) miteinander verbundene Stufen und eine Stufentrennvorrichtung mit einer an dem Verbindungsteil (13) anliegenden kreisförmigen Hohlladung (15), wobei die Hohlladung eine Sicherheitshülle (1), eine in der Sicherheitshülle (1) angeordnete Sprengladung (2) mit einer V-förmigen konkaven Oberfläche (2B), einen hinter der Sprengladung (2) angeordneten Sprengzünder (3) und eine vor der V-förmigen konkaven Oberfläche (2B) der Sprengladung (2) angeordnete Schutzverkleidung (4) aufweist, wobei die Sprengladung (15) ferner ein pyrogenes Material (10) zum Erhitzen der Schutzverkleidung (4) aufweist, wobei das pyrogene Material (10) auf der V-förmigen konkaven Oberfläche (2B) der Sprengladung (2) angeordnet ist und die Schutzverkleidung (4) an dem pyrogenen Material (10) angeordnet ist oder das pyrogene Material (10) in die Sprengladung (2) gemischt ist.

2. Luftfahrtfahrzeug, **dadurch gekennzeichnet, dass** es eine Neutralisationsvorrichtung zum Neutralisieren eines Teils des Fahrzeugs aufweist, wobei die Neutralisationsvorrichtung eine Hohlladung (15) aufweist, die eine Sicherheitshülle (1), eine in der Sicherheitshülle (1) angeordnete Sprengladung (2) mit einer V-förmigen konkaven Oberfläche (2B), einen hinter der Sprengladung (2) angeordneten Sprengzünder (3) und eine vor der V-förmigen konkaven Oberfläche (2B) der Sprengladung (2) angeordnete Schutzverkleidung (4) aufweist, wobei die Sprengladung (15) ferner ein an einer Innenfläche einer Wand (20) des Luftfahrtfahrzeugs anliegendes pyrogenes Material (10) zum Erhitzen der Schutzverkleidung (4) aufweist, wobei das pyrogene Material (10) auf der V-förmigen konkaven Oberfläche (2B) der Sprengladung (2) angeordnet ist und die Schutzverkleidung (4) auf dem pyrogenen Material (10) angeordnet ist oder das pyrogene Material (10) in die Sprengladung (2) gemischt ist.

3. Luftfahrtfahrzeug nach Anspruch 2, **dadurch gekennzeichnet, dass** die Hohlladung (22, 24) rotationssymmetrisch ist und von der Wand (20) des Luftfahrtfahrzeugs umgeben ist.

4. Luftfahrtfahrzeug nach Anspruch 2, **dadurch gekennzeichnet, dass** die Hohlladung geradlinig ist und auf einer Mantellinie der Innenfläche der Wand (20) des Luftfahrtfahrzeugs angeordnet ist.

## Claims

1. Aeronautical craft (10, 12B) comprising two stages interconnected by a connecting part (13), and a stage separating device comprising a shaped charge (15) of circular shape placed against the connecting part (13). , the shaped charge comprising a containment shell (1), an explosive charge (2) placed in the containment shell (1) and having a V-shaped concave surface (2B), a detonator (3) placed behind the explosive charge (2), and a projection coating (4) placed in front of the V-shaped concave surface (2B) of the explosive charge (2), the shaped charge (15) further comprising a pyrogenic material (10) for heating the projection coating (4), the pyrogenic material (10) being placed on the V-shaped concave surface (2B) of the explosive charge (2) and the projection coating (4) being placed on the pyrogenic material (10), or the pyrogenic material (10) being mixed in the explosive charge (2).

2. Aeronautical craft (10, 12B), **characterized in that** it comprises a device for neutralizing a part of said craft, the neutralization device comprising a shaped charge (15) comprising a containment shell (1), an explosive charge (2) placed in the containment shell (1) and having a V-shaped concave surface (2B), a detonator (3) placed behind the explosive charge (2), and a projection coating (4) placed in front of the V-shaped concave surface (2B) of the explosive charge (2), the shaped charge (15) further comprising a pyrogenic material (10) placed against an inner surface of a wall (20) of the aeronautical craft for heating the projection coating (4), the pyrogenic material (10) being placed on the V-shaped concave surface (2B) of the explosive charge (2) and the projection coating (4) being placed on the pyrogenic material (10), or the pyrogenic material (10) being mixed in the explosive charge (2).

3. Aeronautical craft according to claim 2, **characterized in that** the shaped charge (22, 24) is of revolution and surrounded by the wall (20) of the aeronautical craft (20).

4. Aeronautical craft according to claim 2, **characterized in that** the shaped charge (26) is elongate and is placed on a generatrix of the inner surface of the wall (20) of the aeronautical craft.

FIG. 1

FIG. 2

FIG. 3

FIG. 5A

FIG. 5B

FIG. 5C

20

22

24

26

# FIG. 4

13

15

1

2

14

# FIG. 6A

FIG. 6B

FIG. 6C

**EP 3 102 906 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2972948 A
- US 20110139505 A
- US 3244104 A